# EUROPEAN PATENT SPECIFICATION

(11) **EP 4 043 719 B1**
(45) Date of publication and mention of the grant of the patent: **22.05.2024**
(21) Application number: 20930524.2
(22) Date of filing: 07.04.2020
(51) Int. Cl.: F03B 17/02, F03G 7/04, H02N 2/18

(54) **DEVICE FOR GENERATING ENERGY FROM VARIABLE HYDROSTATIC PRESSURE**
VORRICHTUNG ZUM ERZEUGEN VON ENERGIE AUS VARIABLEM HYDROSTATISCHEM DRUCK
DISPOSITIF DE PRODUCTION D'ÉNERGIE À PARTIR D'UNE PRESSION HYDROSTATIQUE CHANGEANTE

(43) Date of publication of application: 17.08.2022
(73) Proprietor: Konstantinov, Dragomir, 1404 Sofia (BG)
(72) Inventor: Konstantinov, Dragomir, 1404 Sofia (BG)
(74) Representative: Savova, Ekaterina Nikolaeva
(86) International application number: PCT/BG2020/000015
(87) International publication number: WO 2021/203177

(56) References cited:
- CN-A- 104 426 426
- ES-A1- 2 686 420
- JP-A- 2003 028 042
- SU-A1- 1 237 787
- UA-U- 72 865
- US-A1- 2012 267 984
- US-A1- 2019 229 648
- US-B2- 10 072 641

## Description

### Field of invention

The invention has application in power plants as a piezoelectric reactor of renewable energy under conditions of variable hydrostatic pressure.

### Background

Tidal and wave generators of energy are known, which extract it from the fluctuating change in the level of water basins. Piezoelectric measuring devices and energy collectors are also known under the conditions of variable pressure applied to them (for example from pedestrian or car traffic, from variable acoustic pressure, etc.). Also known are water and mercury barometers, which include hydro-chambers with a free surface located horizontally and a vertical part located in a tube with a closed upper end.

ES 2 686 420 A1 discloses a device for energy generation from variable hydrostatic pressures, which is a piezoelectric reactor of renewable energy under the conditions of variable hydrostatic pressure, whereby it consists of hydraulic chamber with liquid, and liquid in column, which are intercommected. The hydraulic chamber with liquid is exposed to the variable atmospheric pressure, the column with liquid is located in a pipe with a closed upper end; one or more one-sided piezoelectric collectors are located on the underside and/or the sides of the hudraulic chamber with liquid, and/or one or more two-sided piezoelectric collectors are located inside the column with luquid. All piezoelectric collectors are connected via electrical network to one or more accumolator devices for storing the generated energy.

### Summary of the invention

It is an object of the present invention to provide a device to serve as a piezoelectric renewable energy reactor under variable hydrostatic pressure conditions in power plants. The present invention proposes additional motor-driven mechanism, compared to the prior art, which allows larger frequency, and subsequent higher energy productivity of the device.

The object is achieved by means of a device which consists of the following elements:
- hydraulic chamber with liquid, as the chamber contains a horizontal "liquid plate" and a vertical "liquid column", which are connected to each other;
- the "liquid plate" is exposed to the changing external atmospheric pressure;
- the "liquid column" is located in a pipe with a closed upper end;
- one or more unilateral piezoelectric collectors are located on the underside and sides of the "liquid plate", and / or one or more bilateral piezoelectric collectors are located inside the "liquid plate";
- all piezoelectric collectors are connected via an electrical grid to one or more battery devices for storage of the generated energy;
- there is a certain volume of vacuum at the upper end of the tube in which the 'liquid column' is located;
- the pipe containing the "liquid column" is flexible and is connected to a motor-driven oscillating mechanism by means of a hinged connection, as the motor-driven oscillating mechanism is supplied by the electric grid;
- in one embodiment, in the upper part of the pipe containing the "liquid column", there is a one-way valve with a trigger, which is connected to the lower part of the "liquid plate" by means of a flexible connection with a certain length.

### Description of the drawings

Figure 1 is a side view of a piezoelectric reactor with a hydraulic chamber, a "liquid plate" and a "liquid column" with a tube containing a vacuum.
Figure 2 is a side view of a piezoelectric reactor with a flexible tube that does not contain a vacuum and is connected to a motor-driven oscillating mechanism.

### Description of preferred embodiments

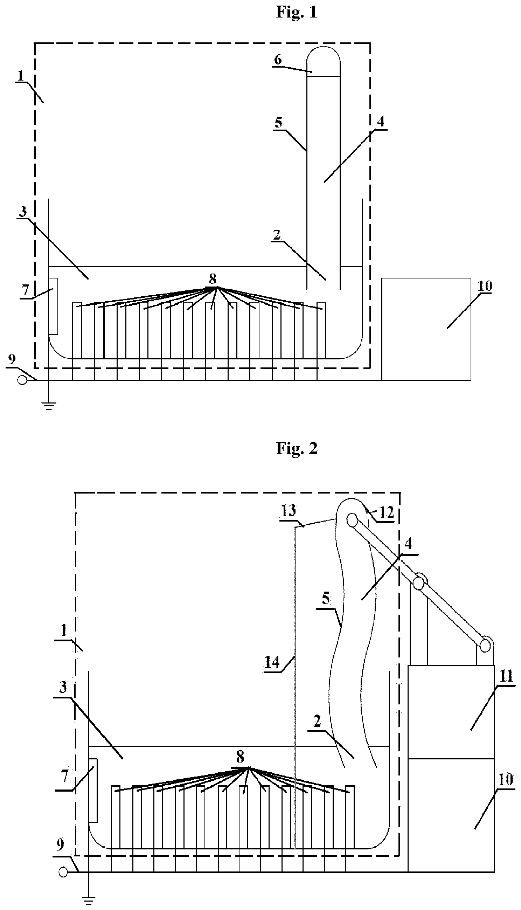

**Figure 1** shows an example of the device according to the prior art . The device consists of the following elements:
- hydraulic chamber (1) with liquid (2), as the chamber contains a horizontal "liquid plate" (3) and a vertical "liquid column" (4), which are connected to each other;
- the "liquid plate" (3) is exposed to the variable external atmospheric pressure;
- the "liquid column" (4) is located in a tube (5) with a closed upper end, under which a certain volume of vacuum (6) is located, so that the height of the liquid (2) due to atmospheric pressure (for example: mercury - about 760 mm, water - about 10 290 mm), does not reach the top and there is a possibility of free fluctuation;
- one or more unilateral piezoelectric collectors (7) are located on the underside and sides of the "liquid plate" (3), and / or one or more bilateral piezoelectric collectors (8) are located inside the "liquid plate" (3);
- all piezoelectric collectors (7) and (8) are connected via an electrical grid (9) to one or more battery devices (10) for storage of the generated energy.

In its action, the "liquid plate" (3) is exposed to the variable atmospheric pressure, which causes synchronous fluctuations in the height of the liquid (2) in the "liquid column" (4), accompanied by the corresponding contraction or expansion of the vacuum (6) volume. This in turn causes fluctuations in the hydrostatic pressure in the entire volume of the "liquid plate" (3), applied unilaterally on the unilateral piezoelectric collectors (7) and bilaterally on the bilateral piezoelectric collectors (8). As a result, the collectors (7) and (8) generate piezoelectric energy, which is transmitted through the electrical grid (9) to one or more battery devices (10), from which this energy can subsequently be drawn. This process of energy generation continues as long as the "liquid plate" (3) remains exposed to the variable atmospheric pressure.

**Figure 2** shows one example of the device according to the present invention. The device consists of the following elements:
- hydraulic chamber (1) with liquid (2), as the chamber contains a horizontal "liquid plate" (3) and a vertical "liquid column" (4), which are connected to each other;
- the "liquid column" (4) is located in a pipe (5) with a closed upper end;
- one or more unilateral piezoelectric collectors (7) are located on the underside and sides of the "liquid plate" (3), and / or one or more bilateral piezoelectric collectors (8) are located inside the "liquid plate" (3);
- all piezoelectric collectors (7) and (8) are connected via an electrical grid (9) to one or more battery devices (10) for storage of the generated energy;
- the pipe (5) containing the "liquid column" (4) is flexible and is connected to a motor-driven oscillating mechanism (11) by means of a hinged connection, as the motor-driven oscillating mechanism (11) is supplied by the electric grid (9) and the battery devices (10);
- in the upper part of the pipe (5) containing the "liquid column" (4), there is a one-way valve (12) with a trigger (13), which is connected to the lower part of the "liquid plate" (3) by means of a flexible connection (14) with a certain length.

During its operation, the motor-driven oscillating mechanism (11), drawing energy from the electric grid (9) or from the battery devices (10), begins to move rhythmically the pipe (5) up and down, which causes synchronous fluctuations in the height of the liquid (2). ) in the "liquid column" (4). When moving the motor-driven oscillating mechanism (11) upwards, the valve (12) initially remains closed under the pressure above atmospheric pressure and the internal suction down from the liquid (2), which rises in the "liquid column" (4) under the pressure of atmospheric pressure. on the surface of the "liquid plate" (3). Then, when the specified length is reached, the flexible connection (14) is stretched, which leads to tension on the trigger (13) and causes the valve (12) to open. The liquid (2) in the "liquid column" (4) remains unmaintained and decreases sharply from the level at the upper end of the "liquid column" (4) to the level of the surface of the "liquid plate" (3). At the next downward stroke of the motor-driven oscillating mechanism (11), the pipe (5) is immersed back in the liquid (2) and the flexible connection (14) is released, and the valve (12) remains open under the pressure inside the air expelled by the liquid (2), which enters back into the "liquid pillar". This mechanical vibrational process causes a series of high-frequency shock oscillations in the hydrostatic pressure in the entire volume of the "liquid plate" (3), according to the so-called Second Pascal's Law, also called Stephen-Pascal's Law, demonstrated for the first time by Blaise Pascal's experiment in 1646, and in a large number of subsequent demonstrations. This variable pressure is applied unilaterally to the unilateral piezoelectric collectors (7) and bilaterally to the bilateral piezoelectric collectors (8). As a result, the collectors (7) and (8) generate piezoelectric energy, which is transmitted through the electrical grid (9) to the battery devices (10), from which this energy can subsequently be drawn. This process of energy generation continues while the motor-driven oscillating mechanism creates fluctuations in the height of the "liquid column" (4).

### Use of the invention

The invention has application in power plants as a piezoelectric reactor of renewable energy under conditions of variable hydrostatic pressure. In addition, there is the possibility of very high energy productivity, provided by the allowable unlimited large ratio between the volumes of the "liquid plate" and "liquid column", and the allowable unlimited number and area of piezoelectric collectors that can be added to one and the same "liquid pillar".

### List of designations

- 1: Hydraulic chamber
- 2: Liquid
- 3: "Liquid plate"
- 4: "Liquid column"
- 5: Pipe
- 6: Volume of vacuum
- 7: Unilateral piezoelectric collectors
- 8: Bilateral piezoelectric collectors
- 9: Electric grid
- 10: Battery devices
- 11: Motor-driven oscillating mechanism
- 12: One-way valve
- 13: Trigger
- 14: Flexible connection

## Claims

1. A device for energy generation from variable hydrostatic pressure, which is a piezoelectric reactor of renewable energy under the conditions of variable hydrostatic pressure,
where the device consists of the following elements:
a hydraulic chamber (1) with liquid (2), the chamber contains a horizontal "liquid plate" (3) and a vertical "liquid column" (4), which are interconnected;
wherein the "liquid plate" (3) is exposed to the variable atmospheric pressure;
the "liquid column" (4) is located in a pipe (5) with a closed upper end;
one or more one-sided piezoelectric collectors (7) are located on the underside and / or the sides of the "liquid plate" (3), and/or one or more two-sided piezoelectric collectors (8) are located inside the "liquid plate" (3);
all piezoelectric collectors (7, 8) are connected via an electrical network (9) to one or more accumulator devices (10) for storing the generated energy;
at the upper end of pipe (5), in which the "liquid column" (4) is located, there is a certain volume of vacuum (6).
**characterized by the fact that**
the pipe (5), containing the "liquid column" (4), is flexible and is connected to a motor-driven oscillating mechanism (11) by means of a hinged connection, the oscillating mechanism (11) draws energy from the electric grid (9) and / or from the one or more accumulator devices (10).

2. Device according to claim 1,
**characterized by the fact that**
in the upper part of pipe (5), containing the "liquid column" (4), there is a one-way valve (12) with a trigger (13), which is connected to the lower part of the "liquid plate" (3) by means of a flexible connection of a certain length.

## Patentansprüche

1. Eine Vorrichtung zur Energieerzeugung aus variablem hydrostatischem Druck, die ein piezoelektrischer Reaktor für erneuerbare Energie unter den Bedingungen eines variablen hydrostatischen Drucks ist, wobei das Gerät aus folgenden Elementen besteht:
Hydraulikkammer (1) mit Flüssigkeit (2), da die Kammer eine horizontale "Flüssigkeitsplatte" (3) und eine vertikale "Flüssigkeitssäule" (4) enthält, die miteinander verbunden sind;
die "Flüssigkeitsplatte" (3) wird dem variablen Atmosphärendruck ausgesetzt;
die "Flüssigkeitssäule" (4) befindet sich in einem Rohr (5) mit geschlossenem oberen Ende;
an der Unterseite und/oder den Seiten der "Flüssigkeitsplatte" (3) befinden sich ein oder mehrere einseitige piezoelektrische Kollektoren (7), und/oder im Inneren der "Flüssigkeitsplatte" (3) befinden sich ein oder mehrere zweiseitige piezoelektrische Kollektoren (8) Flüssigkeitsplatte" (3);
alle piezoelektrischen Kollektoren (7, 8) sind über das elektrische Netzwerk (9) mit einer oder mehreren Akkumulatoreinrichtungen (10) zur Speicherung der erzeugten Energie verbunden;
Am oberen Ende des Rohres (5), in dem sich die "Flüssigkeitssäule" (4) befindet, herrscht ein bestimmtes Vakuumvolumen (6).
**dadurch gekennzeichnet, dass**
Das Rohr (5), in dem sich die "Flüssigkeitssäule" (4) befindet, ist flexibel und über eine Scharnierverbindung mit dem motorisch angetriebenen Schwingmechanismus (11) verbunden, da der Schwingmechanismus (11) Energie aus dem Strom bezieht Netz (9) und/oder von den Batteriegeräten (10).

2. Vorrichtung nach Anspruch 1,
**dadurch gekennzeichnet, dass**
Im oberen Teil der Leitung (5), die die "Flüssigkeitssäule" (4) enthält, befindet sich ein Einwegventil (12) mit Auslöser (13), das mit dem unteren Teil der "Flüssigkeitsplatte" verbunden ist. (3) mittels einer flexiblen Verbindung einer bestimmten Länge.

## Revendications

1. Un dispositif de production d'énergie à partir d'une pression hydrostatique variable, qui est un réacteur piézoélectrique d'énergie renouvelable dans des conditions de pression hydrostatique variable,
où le dispositif est constitué des éléments suivants :
chambre hydraulique (1) avec liquide (2), car la chambre contient une "plaque de liquide" horizontale (3) et une "colonne de liquide" verticale (4), qui sont interconnectées;
la "plaque liquide" (3) est exposée à la pression atmosphérique variable;
la "colonne liquide" (4) est située dans une canalisation (5) à extrémité supérieure fermée;
un ou plusieurs collecteurs piézoélectriques unilatéraux (7) sont situés sur la face inférieure et/ou les côtés de la "plaque liquide" (3), et/ou un ou plusieurs collecteurs piézoélectriques bilatéraux (8) sont situés à l'intérieur de la "plaque liquide" (3). plaque à liquide" (3);
tous les collecteurs piézoélectriques (7, 8) sont connectés via un réseau électrique (9) à un ou plusieurs dispositifs accumulateurs (10) pour stocker l'énergie générée;
à l'extrémité supérieure du tube (5), dans lequel se trouve la "colonne de liquide" (4), se trouve un certain volume de vide (6).
**caractérisé par le fait que**
le tuyau (5), contenant la "colonne de liquide" (4), est flexible et est relié au mécanisme oscillant motorisé (11) au moyen d'une liaison articulée, car le mécanisme oscillant (11) prélève de l'énergie du réseau électrique grille (9) et/ou provenant des dispositifs à batterie (10).

2. Dispositif selon la revendication 1,
**caractérisé par le fait que**
dans la partie supérieure du tuyau (5), contenant la "colonne de liquide" (4), se trouve un clapet anti-retour (12) avec une gâchette (13), qui est relié à la partie inférieure de la "plaque de liquide" (3) au moyen d'une connexion flexible d'une certaine longueur.
